# EUROPÄISCHE PATENTSCHRIFT

(11) **EP 2 741 067 B1**
(45) Veröffentlichungstag und Bekanntmachung des Hinweises auf die Patenterteilung: **29.03.2017**
(21) Anmeldenummer: 12196195.7
(22) Anmeldetag: 07.12.2012
(51) Int. Cl.: G01M 3/02, G01M 3/32, G21F 7/053, B25J 21/02

(54) **Prüfsystem und Verfahren zur Prüfung der Dichtigkeit eines Handschuhs, der in einem Port eines Isolators installiert ist**
Testing system and method for testing the seal of a glove which is installed in the port of an insulator
Système de contrôle et procédé de vérification de l'étanchéité d'un gant installé dans un port d'un isolant

(43) Veröffentlichungstag der Anmeldung: 11.06.2014
(73) Patentinhaber: Keil, Michael, 35325 Mücke-Merlau (DE)
(72) Erfinder: Keil, Michael, 35325 Mücke-Merlau (DE); Keil, Christopher, Dr., 35325 Mücke-Merlau (DE)
(74) Vertreter: Patentanwälte Olbricht Buchhold Keulertz

(56) Entgegenhaltungen:
- DE-A1- 10 145 597
- DE-A1-102004 030 766
- DE-A1-102010 031 204
- US-B2- 6 810 715
- SKAN AG: 'WirelessGT - The innovative glove leak testing system' XP055175441

## Beschreibung

### Gegenstand der Erfindung

Die Erfindung betrifft ein Prüfsystem mit einer Prüfscheibe zur Prüfung der Dichtigkeit von Handschuhen, die in Ports eines Isolators installiert sind. Der Handschuh bildet mit dem Isolator einen räumlich von der Umgebung abgetrennten Bereiche, wobei ein eine Mehrzahl von Prüfscheiben umfassendes Prüfsystem und ein Verfahren zur umfassenden Auswertung der erhobenen Daten und ihre Nutzung zur Erhöhung der Sicherheit, Zuverlässigkeit und Produktivität von Anlagen mit solchen Bereichen dienen.

### Begriffsbestimmung

Der Begriff "räumlich von der Umgebung abgetrennter Bereich" beinhaltet beliebige Ausführungen sogenannter Isolatoren und Barrieresysteme (Restricted Area Barrier Systems - RABS), bei denen der Innenraum durch Wände vollständig (im Falle eines Isolators) bzw. partiell (im Falle von RABS als halboffenen Systemen) von der Umgebung getrennt ist und eine permanente Druckdifferenz zwischen Außenraum (Umgebung) und abgetrenntem Innenraum aufrechterhalten wird. Durch diese permanente Druckdifferenz wird ein direkter (ungefilterter) Stofftransport in Richtung des Bereiches mit höherem Druck unterbunden. Je nach Einstellung der Druckdifferenz betrifft das den Stofftransport vom abgetrennten Bereich zur Umgebung oder aber von der Umgebung zum abgetrennten Bereich. Bei einem RABS wird die Druckdifferenz so gewählt, dass eine permanente laminare Strömung (Verdrängungsströmung) in die Gegenrichtung entsteht. Bei einem Isolator wird auch der Stofftransport in die Gegenrichtung unterbunden, sodass die Atmosphäre in seinem Inneren auch in turbulente Bewegung geraten darf.

Wie im 2008 aktualisierten "Anhang 1 zum EG-Leitfaden der Guten Herstellungspraxis - Herstellung steriler Arzneimittel" wird in der vorliegenden Anmeldung nicht zwischen Isolatoren und RABS unterschieden. Vielmehr wird der Begriff "Isolator" als Oberbegriff verwendet. Auch entsprechende Anlagen in der Kerntechnik, üblicherweise als Handschuhboxen (Glove Boxes) bezeichnet, sollen darunter subsumiert werden.
Die Wände des Isolators weisen in der Regel Ports in Form von Durchbrüchen auf, die Manipulationen in seinem Innenraum durch einen im Außenraum befindlichen Operator ermöglichen. Die Ports dürfen allerdings die Trennung zwischen Innen- und Außenraum nicht beeinträchtigen und sind deshalb üblicherweise mit gasdicht eingesetzten, undurchlässigen Schutzhandschuhen mit langen Stulpen ausgestattet. Für Manipulationen, die eine besonders große Bewegungsfreiheit erfordern, können die Ports erweitert und z. B. mit gasdicht eingesetzten Halbanzügen ausgestattet werden. Für derartige Schutzhandschuhe und Halbanzüge wird als Oberbegriff der Begriff "Handschuh" verwendet.

Unter einer Leckage ist ein Defekt in der Trennung zwischen dem Innenraum des Isolators und dem Außenraum zu verstehen, der einen Transportweg in der zu unterbindenden Richtung und damit den Eintrag stoffgebundener Kontaminationen von der Umgebung in den Innenraum oder vom Innenraum in die Umgebung ermöglicht. Eine Leckage wird auch als Verletzung der Integrität oder Dichtigkeit des Isolators bezeichnet.

### Hintergrund der Erfindung

Isolatoren werden in verschiedenen Bereichen der Industrie, z. B. in der Chemie, der Pharmazie, der Kerntechnik, aber auch in der Medizin benötigt, um ein von der Umgebung separiertes Volumen herzustellen, in welchem ausgewählte Substanzen aufbewahrt und manipuliert, z. B. chemischen Reaktionen unterzogen, werden können, wobei der Stofftransport in (mindestens) einer Richtung (vom Isolator zur Umgebung oder aber von der Umgebung zum Isolator) unterbunden wird.
Die Unterbindung des Stofftransports vom Isolator in die Umgebung ist z. B. erforderlich, wenn radioaktive Substanzen oder pulverförmige Chemikalien im Isolator aufbewahrt und gehandhabt werden. Isolatoren im Nuklearbereich (Glove Boxes) werden dabei mit hohem Unterdruck betrieben, um den Austritt radioaktiver Substanzen in die Umgebung unter allen Umständen zu vermeiden. Hingegen genügt bei Chemikalien ein geringer Unterdruck im Vergleich zum Atmosphärendruck.

Ein Stofftransport von der Umgebung in den Isolator muss dagegen insbesondere bei Isolatoren für aseptische pharmazeutische Prozesse unterbunden werden, um eine Kontamination des Isolatorvolumens bzw. Innenraums mit Keimen aus der Umgebung zu vermeiden. Hierfür genügt bereits ein relativ geringer Überdruck gegenüber dem Atmosphärendruck.

Vorzugsweise erfolgt die Handhabung der Substanzen im Isolator in beiden Fällen mithilfe ferngesteuerter mechanischer Manipulatoren. Es gibt jedoch eine Vielzahl von Prozessen, bei denen eine solche Automatisierung nicht oder nur mit unvertretbar hohen Kosten möglich ist, sodass auf den Menschen als Operator nicht verzichtet werden kann. Der Zugriff des Operators auf das Isolatorinnere erfolgt dabei über Durchbrüche in der Wand des Isolators, den sogenannten Ports, die mit flexiblen, hermetisch dicht eingespannten Handschuhen aus einem hinreichend widerstandsfähigen Material ausgestattet sind. Die Handschuhe können zum Einen die Dichtheit (Integrität) des Isolatorvolumens sicherstellen, zum Anderen aber auch dem Operator die nötige Bewegungsfreiheit geben, um die notwendigen Manipulationen im Innenraum auszuführen.
Jede Störung der Integrität des Isolators ist mit wirtschaftlichen oder sogar gesundheitlichen Risiken behaftet. Dringen beispielsweise Keime aus der Umgebung in den Isolator ein, so kann eine ganze Charge aseptisch hergestellter pharmazeutischer Produkte unbrauchbar werden. Treten im umgekehrten Fall toxische Substanzen aus dem Isolator aus, so können sie den Operator und die Umgebung gefährden. Deshalb müssen solche Störungen unbedingt verhindert und, falls sie trotz aller Gegenmaßnahmen dennoch auftreten, unmittelbar erkannt und beseitigt werden.

International anerkannte Vorgaben, wie z. B. der speziell an die Pharmaindustrie adressierte und 2004 aktualisierte Leitfaden "Guidance for Industry - Sterile Drug Products Produced by Aseptic Processing - Current Good Manufacturing Practice" der U.S. Food and Drug Administration (FDA), empfehlen daher die Durchsetzung eines umfassenden präventiven Wartungsprogramms. Handschuhe, Dichtungen, Versiegelungen, aber auch Transfersysteme sollten einer täglichen Prüfung unterzogen werden. Zudem sollte die tatsächliche Einsatzdauer aller kritischen Komponenten sorgfältig schriftlich protokolliert werden, um einen rechtzeitigen Austausch vor Ablauf der zulässigen Nutzungsdauer sicherzustellen.

Besondere Aufmerksamkeit widmet der FDA-Leitfaden den Handschuhen. Schadhafte Handschuhe oder Stulpen bilden Kontaminationskanäle und stellen eine kritische Verletzung der Integrität des Isolators dar. Empfohlen wird ein präventives Wartungsprogramm, das bereits mit der Auswahl eines besonders dauerhaften Handschuhmaterials und einer datenbasierten Festlegung der Fristen des Handschuhwechsels beginnt. Bei jeder Nutzung sollten die Handschuhe visuell auf makroskopische Defekte überprüft werden. Physikalische Integritätstests sollten routinemäßig durchgeführt werden. Das Monitoring- und Wartungsprogramm sollte jeden Handschuh mit eingeschränkter Integrität identifizieren und seinen Austausch veranlassen.

Der Leitfaden verweist auf die Gefahr einer mikrobiellen Migration durch mikroskopische Löcher in Handschuhen und auf den Mangel an hochempfindlichen Integritätstests für Handschuhe und empfiehlt deshalb die sorgfältige hygienische Behandlung des Handschuhinneren sowie das zusätzliche Tragen dünner Einweghandschuhe durch den Operator.

Im Bereich der EU gelten vergleichbare, 2008 aktualisierte Regelungen, die in deutscher Übersetzung im "Anhang 1 zum EG-Leitfaden der Guten Herstellungspraxis - Herstellung steriler Arzneimittel" niedergelegt sind. Die darin enthaltenen Empfehlungen zu Isolatoren gehen aber nicht über die Vorgaben des FDA-Leitfadens hinaus, sodass dieser als allgemeingültiger Maßstab betrachtet werden kann.

### Stand der Technik

Um die Vorgaben des FDA-Leitfadens zu erfüllen, wurde bereits eine Vielzahl von kombiniert umzusetzenden Maßnahmen (Handlungsanweisungen, Mess- und Prüfverfahren sowie Vorschriften zur umfassenden Dokumentation) entwickelt und in der Literatur beschrieben.

Die bekannten Maßnahmen weisen jedoch erhebliche Nachteile auf:
Die Arbeitsabläufe sind sehr komplex und erfordern eine häufige und zeitaufwendige Schulung des Personals, das befähigt werden muss, eine Vielzahl manueller Schritte in der vorgegebenen Reihenfolge und in stets gleichbleibender Qualität durchzuführen. Voraussetzung hierfür sind hochmotivierte, eigenverantwortlich handelnde Mitarbeiter, die die Betriebsanweisungen jederzeit, auch bei fehlender Aufsicht und unter Termindruck, exakt befolgen. Dennoch sind fahrlässig oder vorsätzlich herbeigeführte Regelverstöße unvermeidlich.

Viele Daten mit sicherheitsrelevantem Charakter, insbesondere die laufende Nutzungsdauer und die Einsatzbedingungen für jeden einzelnen Handschuh (Handschuhhistorie), werden gar nicht erfasst, da das bisher nur durch eine manuelle und damit sehr zeitaufwendige und fehleranfällige Dokumentation möglich wäre. Die Sicherheit wird stattdessen durch eine Verkürzung der Intervalle des Handschuhwechsels gewährleistet.

Die bisher entwickelten Verfahren zur Prüfung der Integrität von Isolatoren, insbesondere der in den Handschuhports installierten Handschuhe, sind sehr zeit- und arbeitsaufwendig, unabhängig davon, ob es sich um eine routinemäßige Prüfung oder um eine außerplanmäßige Prüfung aufgrund eines Zwischenfalls handelt. Bei vielen Verfahren müssen die Handschuhe zur Prüfung ausgebaut, in einer Prüfvorrichtung geprüft und dann wieder eingebaut werden. Aus dem hohen Zeit- und Arbeitsaufwand bei der Anwendung dieser Verfahren resultieren eine Reihe weiterer Nachteile: Die Verfahren können nicht in laufende Produktionsabläufe integriert werden. Beim Ausbau und Wiedereinbau der Handschuhe können dieselben beschädigt werden. Beschädigungen, die erst beim Wiedereinbau nach der Prüfung verursacht werden, und daraus resultierende Leckagen können nicht detektiert werden. Da zudem die Reihenfolge der Handschuhe beim Aus- und Wiedereinbau in der Regel unbeachtet bleibt, ist die Erstellung einer Handschuhhistorie mit diesen Verfahren nicht ohne weiteres möglich.

Zwar wurden bereits Verfahren beschrieben, die eine Prüfung von Handschuhen im eingebauten Zustand zulassen, jedoch sind die bisher für diese Zwecke verfügbaren Ausrüstungen sperrig und schwer und demzufolge schwierig zu handhaben.

So beschreibt die DE102004030766A1 ein computergestütztes Prüfsystem und -verfahren zur Messung der Dichtheit von in Isolatoren pharmazeutischer Anlagen installierten Handschuhen, bei dem zur Integritätsprüfung eine voluminöse, den zu prüfenden Isolatorport mit installiertem Handschuh großflächig überdeckende Messkammer gasdicht an die Außenwand des Isolators angekoppelt wird. Die Messkammer ist mit Druck- und Temperatur-Messgeräten ausgestattet und kann wahlweise mit Unterdruck oder mit Überdruck betrieben werden. Die Messwerte von Druck und Temperatur werden einer Zentraleinheit zugeleitet, die den Druckverlauf in Abhängigkeit von der Zeit auswertet. Liegt die Druckänderung während einer vorgegebenen Messzeit unterhalb eines festgelegten Grenzwerts, so wird der Handschuh als dicht klassifiziert. Während der Prüfung kann der Handschuh nicht für Manipulationen verwendet werden, sodass die Prüfung außerhalb des laufenden Betriebs erfolgen soll.

Die Zentraleinheit kann mit mehreren Messkammern verbunden werden, sodass die gleichzeitige Prüfung mehrerer Handschuhe möglich ist, jedoch nur einer je Kammer. Als besonderen Vorteil nennen die Anmelder die Druckmessung direkt in der Messkammer (im Gegensatz zu vorher bekannten Vorrichtungen, wo entfernt liegende Messgeräte über störanfällige Druckschläuche angebunden werden). Die computergestützte Auswertung ermöglicht die quantitative Bestimmung von Leckage-Raten, jede Messkammer und jeder Handschuh sind eindeutig identifizierbar.

Ein erster Nachteil dieser Lösung ist die Verwendung schwerer, großräumiger Messkammern, deren eigene Integrität, also die gasdichte Ankopplung an die Außenwand des Isolators, zunächst aufwendig sichergestellt werden muss. Zudem belasten sie durch ihr Eigengewicht die Isolatorwand sehr ungleichmäßig (Zugbelastung im oberen Teil, Druckbelastung im unteren Teil) und können daher selbst Integritätsprobleme, insbesondere Leckagen im Bereich der Dichtungen des Isolatorports, auslösen. Die zeitaufwendige An- und Abkopplung der Messkammer führt außerdem zu Produktivitätsverlusten, da der Port nicht nur während der Messung, sondern auch während dieser Rüstzeiten nicht zweckgemäß genutzt werden kann.

Ein zweiter Nachteil besteht darin, dass zwar individuelle Identifikationselemente für jede Messkammer und jeden Handschuh vorgesehen sind, aber keine Zuordnung zu den Ports erfolgt. Es ist daher nicht möglich, die Position der einzelnen Handschuhe automatisch zu erfassen und zu dokumentieren. Um rückverfolgen zu können, für welche Produktionsprozesse ein Handschuh verwendet und mit welchen Chemikalien er wie lange in Kontakt gekommen ist, müsste manuell dokumentiert werden, an welchen Isolatorports der Handschuh während seiner bisherigen Nutzungsdauer installiert war, was nicht praktikabel ist. Die Restnutzungsdauer des Handschuhs anhand seiner tatsächlichen Belastung mit Chemikalien ist daher kaum individuell festzulegen. Praktikabel sind lediglich feste Intervalle für den Handschuhwechsel. Auch wenn prozessabhängige, unterschiedliche Nutzungsdauern für die Handschuhe aus zuverlässigen Experimenten bekannt sind, wird aus Sicherheitsgründen stets das kürzeste Wechselintervall gewählt, was zu weiteren Produktivitätsverlusten aufgrund des Zeitaufwands beim vorzeitigen Handschuhwechsel und zu höheren Kosten beim Einkauf der Handschuhe führt.

Es sind bereits Lösungen bekannt, die den ersten Nachteil der obigen Lösung beseitigen, indem die unhandlichen, von außen an den Isolator anzukoppelnden Messkammern durch handliche, kompakte Prüfscheiben ersetzt werden, die direkt in einen Isolatorport eingesetzt werden und diesen durch Expansion eines Dichtungselements gasdicht verschließen.

Eine solche Prüfscheibe ist in der US 6,810,715 B2 beschrieben. Sie umfasst eine Grundplatte, eine Deckplatte und eine dazwischenliegenden Dichtungseinrichtung, z. B. einer Platte aus Neopren. Eine Bohrung im Zentrum der drei Platten nimmt einen Schraubmechanismus auf, mit dem Grund- und Deckplatte gegeneinander gezogen werden und dabei die Neoprenplatte zusammenpressen, die sich infolgedessen in radialer Richtung ausdehnt und den Port mit dem installierten Handschuh gasdicht verschließt. Zwei weitere Bohrungen dienen der Aufnahme eines Drucksensors sowie eines Einlassventils, das mit einer Druckflasche und/oder einer Pumpe verbunden ist.

Nachteilig ist die etwas umständliche Herstellung der dichtenden Verbindung zwischen Isolatorport und Prüfscheibe durch manuelle Betätigung des Schraubmechanismus sowie die Herstellung des zur Prüfung notwendigen Überdrucks durch die Verbindung mit einer externen Druckflasche und/oder Pumpe. Zudem ist keine Speicherung und Weiterverarbeitung der vom Drucksensor gemessenen Daten vorgesehen. Die Gewinnung von Zusatzinformationen durch Verknüpfung dieser Daten mit externen, vom Anwender bereitgestellten Daten ist daher nicht möglich.

Auch die Anmelderin selbst hat in der DE 10 145 597 A1 und in der DE 20 115 261 U1 ein Verfahren zur Dichtheitsprüfung an einem Arbeitshandschuh sowie eine zur Durchführung dieses Verfahrens geeignete Dichtscheibe beschrieben. Die Dichtscheibe erlaubt bereits die Messung und Speicherung von Druckverläufen in einem Mikroprozessor und das Auslesen der Werte über eine Schnittstelle. Diese Dichtscheibe ist somit auch als Prüfscheibe geeignet. Mittel zur eindeutigen Identifikation und Erkennung der Ports und Handschuhe sind aber nicht vorgesehen, sodass eine umfassende Datenauswertung und eine Gewinnung von Zusatzinformationen aus den Daten (insbesondere die Erstellung von Handschuhhistorien) nicht oder nur mit hohem Arbeitsaufwand unter Einbeziehung fehleranfälliger handschriftlicher Dokumentationen möglich ist.

In DE 10 2010 031 204 A1 wird nun in Weiterentwicklung der in DE 10 145 597 A1 und DE 20 115 261 U1 Verfahren bzw. Dichtscheiben ein Handschuh beschrieben, der in einen entsprechenden Port einsetzbar ist und mit einem Identifizierungsmittel, wie einem RFID-Chip versehen ist. Durch Auslesen des Identifizierungsmittels können dann die Zusatzinformationen ermittelt werden, die zum Erstellen einer Handschuhhistorie erforderlich sind.

### Aufgabe der Erfindung

Eine Aufgabe der Erfindung besteht darin, die Nachteile des Standes der Technik zu beseitigen und ein Prüfsystem bzw. ein Verfahren zum Betrieb des Prüfsystems bereit zu stellen, mit dem eine Historie auf dem Handschuh bezogener Prozessdaten erstellbar ist und eine Vorhersage über eine voraussichtlichen Restlebensdauer des Handschuhs treffbar ist, wobei eine Anlagen- und Prozesssicherheit erhöht und eine Nutzungsdauer der Handschuhe verlängert werden soll.

### Lösung

Diese Aufgabe wird durch ein Prüfsystem mit den Merkmalen des Anspruchs 1, sowie durch ein Verfahren mit den Merkmalen des Anspruchs 12 gelöst. Vorteilhafte Ausgestaltungen ergeben sich aus den Unteransprüchen.

Durch das Vorsehen von Identifikationselementen am Handschuh sowie am Port kann durch die Leseeinrichtung eine eindeutige Identifizierung nicht nur des Handschuhs, sondern auch des Ports erfolgen und entsprechende Identifikationsdaten direkt mit einem aufgenommenen Druckverlauf verglichen werden. Aus den Identifikationsdaten des Ports ergibt sich dann ein Hinweis auf die in der Umgebung des Handschuhs abgelaufenen Prozesse, wobei durch die Identifikation des Handschuhs eine eindeutige und nachvollziehbare Zuordnung erfolgt. So kann beispielsweise eine Historie zu jedem Handschuh hinterlegt sein und ein einmal als fehlerhaft erkannter Handschuh dauerhaft gesperrt werden. Ein Einsetzen des Handschuhs an einem anderen Port wird durch die Prüfscheibe bzw. durch das Prüfsystem ebenfalls sicher erkannt.

Durch das erfindungsgemäße Prüfsystemkönnen die insbesondere gleichzeitig für mehrere Handschuhe mithilfe einer Mehrzahl der erfindungsgemäßen Prüfscheiben erhobenen Daten zwischengespeichert werden. Diese Daten können einer Erstauswertung unterzogen werden, wobei notwendige Sofortmaßnahmen im Falle einer detektierten Leckage einleitbar und die Daten einschließlich der Ergebnisse der Erstauswertung in einer Datenbank ablegbar sind. Eine manuelle Dokumentationen zur Gewährleistung der Rückverfolgbarkeit bis hin zum konkreten Port und Handschuh wird durch automatische Lösungen ersetzt und somit die Effizienz der Mensch-Maschine-Schnittstelle erhöht und ihre Fehleranfälligkeit reduziert. Dadurch ergibt sich ein erweitertes Auswerteverfahren, bei dem die mithilfe der Gesamtheit der Prüfscheiben und des Prüfsystems gewonnenen Informationen so mit Prozessinformationen des Anwenders verbunden werden, dass eine Erhöhung der Anlagensicherheit und -zuverlässigkeit sowie eine optimale Ausnutzung der Lebensdauer von Prozessmitteln, insbesondere der Handschuhe, erzielt wird.

### Die Erfindung und ihre Vorteile

### Prüfscheibe

Die erfindungsgemäße Prüfscheibe zeichnet sich gegenüber den aus dem Stand der Technik bekannten Prüfscheiben dadurch aus, dass sie zusätzlich zu bereits bekannten Komponenten eine Leseeinrichtung zur Auslesung von Identifikationselementen und eine Schnittstelle zur drahtlosen und verschlüsselten Kommunikation mit einer Auswerteeinrichtung aufweist. Dabei ist das Auslesen mehrerer Identifikationselemente, also das des Handschuhs und das des Ports nacheinander oder parallel möglich. Vorzugsweise sind die einzelnen Komponenten in den Innenraum der Prüfscheibe integriert. Bei der Vorrichtung zur Auslesung von Identifikationselementen kann es sich z. B. um ein RFID-Modul, einen CCD-Sensor oder einen Lasersensor handeln, während die Schnittstelle zur drahtlosen und verschlüsselten Kommunikation durch ein WiFi-Modul, W-LAN-Modul, Bluetooth-Modul oder eine andere funkbasierte Lösung gebildet werden kann.

Die aus dem Stand der Technik bekannten, für die Funktion der Prüfscheibe hilfreichen Komponenten umfassen eine expandierbare Dichteinrichtung, zwei Mikroluftpumpen, einen Drucksensor und einen Temperatursensor, die vorzugsweise im Innenraum der Prüfscheibe angeordnet sind. Ferner sind üblicherweise ein Druckluftanschluss und eine Energiequelle vorgesehen, die außen an der Prüfscheibe angeordnet sind, wobei sich die Druckluftzuführung an der Vorderseite, die Energiequelle, die sämtliche Komponenten der Prüfscheibe mit elektrischer Energie versorgt, dagegen vorzugsweise an der dem Handschuhvolumen zugewandten Rückseite der Prüfscheibe befindet. In einer bevorzugten Ausführungsform ist im Innenraum der Prüfscheibe zudem ein Display mit nach außen sichtbarem Anzeigefeld enthalten, z. B. ein LCD-Display, das den Operator unmittelbar mit Informationen zum aktuellen Zustand der Prüfscheibe und zum laufenden Prüfvorgang versorgt. Zusätzlich kann die Prüfscheibe mit einer LED-Anzeige ausgestattet sein, durch die der bei der Prüfung festgestellte Zustand des Handschuhs unmittelbar visualisierbar ist.

Diese Energiequelle, vorzugsweise ein Akkumulator, sowie die Anordnung des Drucksensors und des Moduls zur drahtlosen Kommunikation im Innenraum der Prüfscheibe erlauben ihren völlig autarken Betrieb ohne Ankopplung an entfernte Messgeräte oder eine entfernte Energieversorgung.

Ohne die Funktionsweise der Prüfscheibe zu verändern, kann ihre Form und Größe über einen weiten Bereich variiert werden. Diese Variabilität ist erforderlich, um der großen Vielfalt der in der Praxis verwendeten Isolatorports gerecht zu werden.

Vorzugsweise wird die Prüfscheibe als von innen nach außen dichtende Prüfscheibe ausgeführt, die etwas kleiner als der zu prüfende Port ist und deshalb in diesen eingesetzt werden kann. Die dichtende Verbindung wird in diesem Fall hergestellt, indem eine am Außenrand der Prüfscheibe umlaufende Dichteinrichtung zur radialen Expansion gebracht wird, sodass sie den Spalt zwischen Port und Prüfscheibe verschließt. Dies kann beispielsweise durch Druckbeaufschlagung mit Hilfe der an der Prüfscheibe angeordneten Mikroluftpumpe erfolgen.

In bestimmten Fällen, z. B. bei konisch verjüngten Ports, ist eine stabile Fixierung einer Prüfscheibe im Port jedoch nicht möglich. In diesem Fall wird die Prüfscheibe als von außen nach innen dichtende Prüfscheibe mit einer Erweiterung in Form eines Aufsetzringes ausgeführt, die den Befestigungsstutzen des Ports von außen umfasst. Der Aufsetzring kann dabei einstückig mit der Prüfscheibe ausgebildet sein und umgibt einen Aufnahmeraum für den Port. Eine radial innen im Aufsetzring befindliche, nach innen expandierbare, umlaufende Dichteinrichtung gewährleistet das Verschließen des Spalts zwischen Prüfscheibe und Befestigungsstutzen. Die Form des Aufsetzrings ist dabei an die Geometrie des Ports angepasst, also nicht unbedingt kreisförmig, sondern beispielsweise auch oval. Andere Formen mit einem geschlossenen Umfang sind ebenfalls möglich.

Vorzugsweise ist die expandierbare Dichteinrichtung bei beiden Ausführungsformen der Prüfscheibe als aufblasbarer Schlauch ausgeführt, der insbesondere ringförmig ausgebildet ist.

Beide Ausführungsformen der Prüfscheibe werden in den Ausführungsbeispielen näher erläutert.

Im Vergleich zu herkömmlichen, z. B. in der DE102004030766A1 beschriebenen Prüfvorrichtungen ist die erfindungsgemäße Prüfscheibe zur Prüfung von in Isolatorports installierten Handschuhen klein, leicht, handlich und einfach zu installieren. Bei der Verwendung der Prüfscheibe wird lediglich ein gleichmäßiger Druck auf den Rand des jeweiligen Ports ausgeübt, die Isolatorwand aber nur geringfügig belastet, sodass die Prüfscheiben nicht selbst zur Ursache von Integritätsbrüchen (Leckagen) werden können. Bei ihrer Handhabung ist keinerlei schwere körperliche Arbeit zu verrichten. Die Prüfscheiben sind problemlos von Ort zu Ort zu transportieren, ggf. auch ohne einen dafür vorgesehenen Servicewagen, und daher äußerst flexibel einsetzbar.

Sowohl planmäßige als auch außerplanmäßige, durch einen Zwischenfall bedingte, Prüfungen sind jederzeit schnell durchführbar.

Die Dichtheitsprüfung eines Handschuhs läuft beispielsweise wie folgt ab:
Die Prüfscheibe wird am Isolatorport installiert und das Dichtungselement zur Expansion gebracht, sodass der Port verschlossen wird und Handschuh und Prüfscheibe ein gasdicht abgeschlossenes Handschuhvolumen aufbauen.

Dieses Volumen wird nun mit einem definierten Überdruck (im Vergleich zum im Innenraum des Isolators herrschenden Druck) beaufschlagt. Dazu erfolgt zunächst eine Grobeinstellung des Überdrucks (Initialbefüllung) unter Verwendung einer externen, an pharmazeutischen Anlagen standardmäßig vorhandenen Zuführung kontaminationsfreier Druckluft und anschließend eine Feineinstellung des Überdrucks mithilfe der dafür an der Prüfscheibe vorgesehenen Mikroluftpumpe, die die Zuführung kontaminationsfreier, durch ein Vorfilter gereinigter Luft gewährleistet. Die Herstellung einer Verbindung (Druckluftverschlauchung) zu entfernten Druckluftquellen, z. B. Druckflaschen, ist dann nicht erforderlich. Der Drucksensor überwacht den Druckaufbau und schaltet die Mikroluftpumpe bei Erreichen des Zieldrucks ab.

Da die Handschuhmaterialien auf die Druckbelastung mit einer zeitlich verzögerten Dehnung reagieren, wird zunächst eine vorgegebene Relaxationszeit abgewartet, während der ein ausdehnungsbedingter, nicht auf eine Leckage zurückzuführender, Druckabfall zu beobachten ist. Da unterschiedliche Handschuhmaterialien ein unterschiedliches Relaxationsverhalten zeigen, sollte die zweckmäßige Dauer dieser Relaxationszeit vorab experimentell bestimmt werden.

Nach Ablauf dieser Relaxationszeit (Stabilisierungsphase) beginnt die eigentliche Messung, während der der Druckverlauf über eine vorgegebene Zeitdauer erfasst wird. Der gemessene Druckverlauf wird vom Drucksensor unmittelbar an den Mikroprozessor der Druckmesseinrichtung weitergeleitet. Der Mikroprozessor erhält von der Leseeinrichtung zur Auslesung von Identifikationselementen, vorzugsweise einem RFID-Modul, außerdem die Information über die Identität des geprüften Ports und des dort installierten Handschuhs. Er verknüpft diese Identifikationsdaten mit dem gemessenen Druckverlauf und überträgt den kompletten Datensatz mithilfe der Schnittstelle zur drahtlosen und verschlüsselten Kommunikation, vorzugsweise einem WiFi-Modul, an eine Auswerteeinheit, beispielsweise einen Auswerterechner.

Voraussetzung hierfür ist die Ausstattung sowohl des Ports als auch des Handschuhs mit einem eindeutigen Identifikationselement. Die kombinierte Verwendung von Identifikationselementen für Handschuh und Port ist ein wesentlicher Bestandteil der Erfindung.

Besonders vorteilhaft ist es, wenn die Leseeinrichtung und die Identifikationselemente eine funkbasierte Auslesung zulassen. Dafür geeignete Identifikationselemente, die irreversibel mit den Ports bzw. den Handschuhen verbunden werden können, sind kommerziell erhältlich.

### Prüfsystem

Der beschriebene Prüfvorgang kann gleichzeitig mit einer beliebigen Anzahl der erfindungsgemäßen Prüfscheiben an einer entsprechenden Anzahl von mit Handschuhen bestückten Ports durchgeführt werden. Dabei kann durch eine (vorzugsweise drahtlose) Verbindung der Prüfscheiben (in beliebiger Anzahl, aber mindestens eine) mit einem einzigen zentralen Auswerterechner ein flexibles, jederzeit verfügbares und autarkes Prüfsystem erhalten werden, mit dem eine gleichzeitige Dichtheitsprüfung mehrerer Handschuhe möglich ist.

Aufgrund der Autarkie der einzelnen Prüfscheiben (keine Ankopplung äußerer Energiequellen, Messgeräte und Kommunikationsmittel) sind die zur Vor- und Nachbereitung der Prüfung erforderlichen Rüstzeiten sehr kurz.

Im Vergleich zu bekannten Prüfsystemen, bei denen ein Auswerterechner mit mehreren Messkammern, die jedoch die im vorangehenden Absatz genannten Autarkiemerkmale nicht oder nur teilweise aufweisen, verbunden ist, erlaubt das auf den erfindungsgemäßen Prüfscheiben basierende Prüfsystem eine deutliche Verkürzung der Gesamtdauer der Prüfung. Entsprechend verlängert sich die für die eigentlichen Produktionsprozesse verfügbare Zeit, was zu einer erheblichen Produktivitätssteigerung führt.

Der Auswerterechner bzw. die Auswerteeinheit verfügt über die bekannten, für die Funktionsfähigkeit wesentlichen Komponenten: eine Empfangseinheit, eine Steuereinheit, eine Auswerteeinheit, eine Speichereinheit und eine Ausgabeeinheit. Besonders vorteilhaft ist es, wenn er über eine Verbindung zur Datenbank des Anwenders verfügt und somit auch auf ausgewählte prozessbezogene Daten (z. B. Art der in einem Isolator eingesetzten Chemikalien und Dauer ihrer Verwendung) zugreifen kann.

In einer bevorzugten Ausführungsform des Prüfsystems werden die Messergebnisse (Druckverläufe), die im nachfolgend beschriebenen Auswerteverfahren erhaltenen Prüfergebnisse und die zugehörigen Identifikationsdaten des Handschuhs und des Ports auf einem Display der Auswerteeinheit optisch dargestellt. Dadurch wird eine einfachere und schnellere Identifizierung und Lokalisierung der Prüfscheiben gewährleistet, sodass die Mess- und Prüfergebnisse den einzelnen Ports und Handschuhen ebenfalls einfach, schnell und eindeutig zugeordnet werden können.

Weisen die Prüfscheiben des Prüfsystems als bevorzugtes Merkmal ein Display auf, so werden die Mess- und Prüfergebnisse jedes an einem Port installierten Handschuhs auch auf dem Display der an dem betreffenden Port eingesetzten Prüfscheibe angezeigt und, wenn diese mit einer zusätzlichen LED-Anzeige ausgestattet ist, durch das Aufleuchten einer bestimmten LED oder einer Kombination von LEDs unmittelbar visualisiert. So kann eine bestandene Dichtheitsprüfung durch das Aufleuchten einer grünen LED, eine nicht bestandene Dichtheitsprüfung hingegen durch das Aufleuchten einer roten LED an der betreffenden Prüfscheibe angezeigt werden. Es sind noch weitere Zustände, die im Ergebnis des nachfolgend beschriebenen erweiterten Auswerteverfahrens ermittelt werden, visualisierbar. So kann eine bestandene Dichtheitsprüfung, bei der aber bereits eine beschleunigte Degradation des Handschuhmaterials festgestellt wurde, durch das Aufleuchten einer gelben LED angezeigt werden. Diese Visualisierung mithilfe einer LED-Anzeige ermöglicht dem Operator einen schnellen und direkten Überblick über den Zustand aller Ports und Handschuhe der überwachten Produktionsanlagen, ohne dass er die auf dem Display angezeigten quantitativen Mess- und Prüfergebnisse auswerten muss.

In einer weiteren bevorzugten Ausführungsform ist das Prüfsystem mit einer Vorrichtung zur Benutzerauthentifizierung ausgestattet, um eine unauthorisierte Bedienung zu verhindern. Sowohl der Auswerterechner als auch die Prüfscheiben werden erst dann zur Benutzung freigegeben, wenn sich der Operator authentifiziert hat. Erst dann kann die oben beschriebene Dichtheitsprüfung eingeleitet werden. Zur Authentifizierung können elektronische Schlüsselsysteme, Fingerabdrucksensoren, Iriserkennung, einzugebende Sicherheitscodes und andere Mittel eingesetzt werden.

### Auswerteverfahren

Die Auswerteeinheit bzw. der Auswerterechner empfängt die von einer beliebigen Anzahl von Prüfscheiben (seriell oder parallel) erhobenen Daten (Druckverläufe), speichert sie und bereitet sie unmittelbar (noch während der laufenden Messung) auf. Stellt der Auswerterechner dabei eine Unregelmäßigkeit (insbesondere einen zu schnellen Druckabfall) fest, die auf eine Integritätsverletzung durch einen fehlerhaften Handschuh (akute Leckage) hinweist, so sendet er sofort ein Signal, so dass der Operator unmittelbar auf die Integritätsverletzung und die Notwendigkeit sofortiger Gegenmaßnahmen hingewiesen wird. Zudem besteht die Möglichkeit, das expandierte Dichtungselement der betroffenen Prüfscheibe automatisch zu sperren, sodass die Prüfscheibe nach Abschluss der Messung nicht entfernt werden kann. Die Prüfscheibe fungiert damit als Dichtscheibe und sichert solange die Integrität des Isolators, bis die festgestellte Integritätsverletzung beseitigt ist.

In einer besonderen Ausführungsform, die für Anwendungen mit sehr hohen Sicherheitsanforderungen geeignet ist, analysiert bereits der Mikroprozessor der Prüfscheibe den Druckverlauf und löst bei Feststellung eines zu schnellen Druckabfalls, der auf eine akute Leckage hinweist, die im vorangehenden Absatz genannten Reaktionen aus. Die Integritätsverletzung wird also in diesem Fall auch dann detektiert, wenn die Verbindung zwischen den Prüfscheiben und dem Auswerterechner ausfällt. Aufgrund der hohen Zuverlässigkeit der Verbindung zwischen den Prüfscheiben und dem Auswerterechner, die drahtlos mittels W-LAN-, WiFi-, Bluetooth- oder einer anderen funkbasierten Technologie realisiert wird, kommt diese Ausführungsform nicht so häufig zum Einsatz.
Sämtliche Prüfergebnisse (Druckverläufe, Identifikationsnummern und Prüfparameter), sowohl die Ergebnisse der planmäßigen als auch die der außerplanmäßigen, durch einen Zwischenfall bedingten, Prüfungen werden in der Speichereinheit des Auswerterechners abgelegt und können jederzeit wieder abgerufen werden. Da sie auch eindeutige Identifizierungsdaten des Ports und des Handschuhs beinhalten, ist zu jedem Zeitpunkt nachvollziehbar, an welchem Port und für welchen Handschuh sie erzielt wurden. Durch den Vergleich der Ergebnisse zweier aufeinanderfolgender Routineprüfungen desselben Handschuhs ermittelt der Auswerterechner, ob sich dessen Zustand in den Grenzen der zu erwartenden Abnutzung verändert hat oder ob eine beschleunigte Degradation eingetreten ist, die zusätzliche Maßnahmen wie z. B. eine Verkürzung des Prüfintervalls oder einen vorzeitigen Austausch des Handschuhs notwendig macht. Der Verlauf der Degradation jedes einzelnen Handschuhs wird somit vollständig erfasst. Stellt der Auswerterechner eine solche beschleunigte Degradation fest, die einen zeitnahen Austausch des Handschuhs erfordert, so sendet er sofort eine Mitteilung an die zugehörige Prüfscheibe. Auf dieser Prüfscheibe erscheint dann ein Warnsignal, sodass der Operator unmittelbar auf die Unregelmäßigkeit hingewiesen wird. Zudem besteht die Möglichkeit, das expandierte Dichtungselement der betroffenen Prüfscheibe automatisch zu sperren, sodass die Prüfscheibe nach Abschluss der Messung nicht entfernt werden kann und bis auf weiteres die Integrität des Isolators sichert. Da es sich in diesem Fall jedoch nicht um eine akute Leckage, sondern nur um eine schleichende Verschlechterung handelt, kann der Operator entscheiden, ob er sofort Gegenmaßnahmen einleitet oder diese bis zur nächsten planmäßigen Produktionsunterbrechung aufschiebt. Im Gegensatz zur akuten Leckage kann er hier gegebenenfalls die Prüfscheibe wieder freigeben und entfernen, um die Produktion über einen begrenzten Zeitraum fortzusetzen. Um den Operator bei seiner Entscheidung zu unterstützen, prognostiziert der Auswerterechner anhand der Ergebnisse der letzten aufeinanderfolgenden Routineprüfungen die zu erwartende Entwicklung der Leckage-Rate des Handschuhs und ermittelt dessen zulässige Restnutzungsdauer, die dem Operator mitgeteilt wird. Das Auswerteverfahren bewertet die Dichtheit des Handschuhs also nicht nur qualitativ (Entscheidung zwischen dicht und undicht), sondern auch quantitativ.

Eine beschleunigte Degradation kann verschiedene Ursachen haben: Sie kann durch einen vom Operator unbemerkt verursachten, sehr kleinen lokalen Defekt, der sich schleichend zu einem größeren Defekt entwickelt, hervorgerufen werden, kann aber auch durch eine Degradation des Handschuhmaterials als Ganzes bedingt sein. Es ist wünschenswert, einen Handschuhwechsel zu veranlassen, bevor eine solche Degradation messbar wird, ohne jedoch die Nutzungsdauer des Handschuhs unnötig zu verkürzen.

Unbemerkt verursachte lokale Defekte sind nicht vorhersehbar, die Degradation des Handschuhmaterials als Ganzes ist jedoch prognostizierbar, wenn sämtliche während der Nutzungsdauer des Handschuhs einwirkenden schädigenden Einflüsse quantitativ bekannt sind, z. B. die Dauer der Einwirkung und Konzentration einer besonders aggressiven Chemikalie. Zudem muss die Reaktion des Handschuhmaterials auf diese Chemikalie bekannt sein.

Bekannte Prüfsysteme bieten dafür keine oder nur eingeschränkte Möglichkeiten, da die Handschuhe für die Prüfungen ausgebaut werden, wobei nicht erfasst wird, an welchen Ports sie im Verlauf ihrer Nutzungsdauer installiert waren. Damit ist auch nicht nachvollziehbar, welchen Einflüssen sie ausgesetzt waren.

Die Ausstattung aller Handschuhe und Ports mit eindeutigen Identifikationselementen erlaubt es nun aber, unter Ausnutzung des Zugriffs auf ausgewählte prozessbezogene Daten des Anwenders das Auswerteverfahren so zu erweitern, dass es den gesamten Lebenszyklus jedes einzelnen Handschuhs, d. h. den Verlauf seiner Degradation einschließlich ihrer Ursachen, erfasst.

Das erweiterte Auswerteverfahren beinhaltet die Verknüpfung der von den erfindungsgemäßen Prüfscheiben gelieferten Daten mit weiteren, vom Anwender erfassten prozessbezogenen Daten (z. B. Art und Dauer der durchgeführten Produktionsprozesse, verwendete Chemikalien, Nummer der Produktionsanlage). Einbezogen werden können außerdem Daten zur Resistenz der verwendeten Handschuhmaterialien gegenüber den in den Produktionsprozessen eingesetzten Chemikalien. Diese Daten können in den Sicherheitsdatenblättern der Chemikalien enthalten sein oder vom Anwender experimentell ermittelt werden.

Diese Datenkombination ermöglicht eine neue Qualität in der Prozesssicherheit, die sämtliche Vorgaben des FDA-Leitfadens erfüllt und darüber hinausgeht. Durch die Individualisierung der Handschuhe und Ports und die automatische Datenerfassung werden Fehler bei der manuellen Dokumentation und bei der Bestückung der Ports mit Handschuhen vollständig ausgeschlossen. So wird gewährleistet, dass für jeden Produktionsschritt ein Handschuh aus dem dafür vorgesehenen Material mit der vorgeschriebenen Dicke zum Einsatz kommt. Die Kombination der Prüfergebnisse, Material- und Prozessdaten ermöglicht es, den Zustand jedes individuellen Handschuhs zu jedem Zeitpunkt zu kennen, d. h., eine komplette Handschuhhistorie zu erstellen, die seine Einsatzbedingungen, insbesondere die Chemikalienbelastung, und den Verlauf seiner Degradation über seine gesamte Nutzungsdauer erfasst. Dadurch kann jeder einzelne Handschuh bis zum Ablauf seiner individuellen Nutzungsdauer genutzt werden, ohne die Integrität des Isolators und damit die Sicherheit der Anlage durch unzulässig degradierte Handschuhe zu gefährden.

Der für das erweiterte Auswerteverfahren notwendige Zugriff auf die Prozessdaten des Anwenders kann auf unterschiedliche Art und Weise realisiert werden:
Die Auswerteeinheit bzw. der Auswerterechner des Prüfsystems kann z. B. Zugriffsrechte auf ausgewählte, für die oben beschriebene Auswertung erforderliche Daten des Anwenders erhalten. Die Auswertung erfolgt in diesem Fall durch die Auswerteeinheit des Prüfsystems. Die Ergebnisse werden dann an die Datenbank des Anwenders übertragen und dort abgelegt, sodass sie dem Anwender jederzeit zur Verfügung stehen. Die Datenübertragung kann auf bestimmte aufbereitete Daten, z. B. die quantitative Bewertung der Dichtheit eines Handschuhs, beschränkt werden, es können aber auch wesentlich umfangreichere Daten, z. B. komplette Druckverläufe, übertragen werden.

Alternativ kann das Prüfsystem als systemintegrierte Lösung ausgestaltet und vollständig in die Prozessabläufe des Anwenders eingegliedert werden. In diesem Fall werden die Prüfergebnisse (Druckverläufe) nicht durch den Auswerterechner des Prüfsystems gespeichert, sondern direkt in die Datenbank des Anwenders übertragen, die dafür entsprechend angepasst wird. Auch die Auswertung erfolgt dann auf dem System des Anwenders.

Es ist für den Fachmann offensichtlich, dass die Einsatzmöglichkeiten der Prüfscheiben bzw. des erfindungsgemäßen Prüfsystems mit einer oder mehreren Prüfscheiben, und des Auswerteverfahrens nicht auf pharmazeutische Anlagen beschränkt sind. Selbstverständlich sind auch Anwendungen bei Isolatoren im medizinischen Bereich, die je nach Anwendungsfall mit Über- oder Unterdruck betrieben werden, sowie bei Handschuhboxen (Glove Boxes) im Nuklearbereich, die mit hohem Unterdruck betrieben werden, und bei allen anderen Systemen (sowohl Überdruck- als auch Unterdrucksystemen), die aufgrund ihrer Funktion ein hohes Maß an Dichtheit gewährleisten müssen, möglich. Durch eine Verwendung mehrerer Prüfscheiben ist dabei ein Prüfen mehrerer Handschuhe gleichzeitig möglich.

### Bezugszeichenliste

- 1: Prüfscheibe (von innen nach außen dichtend)
- 1': Prüfscheibe (von außen nach innen dichtend)
- 2: Dichteinrichtung für 1, ausgeführt als aufblasbarer Schlauch
- 2': Dichteinrichtung für 1', ausgeführt als aufblasbarer Schlauch
- 3: Ein-/Aus-Schalter
- 4: Start-/Stopp-Taste
- 5: Befüllventil Handschuh
- 6: Vorfilter
- 7: LCD-Display
- 8: Drucksensor
- 9: Mikroprozessor
- 10: Drucksensor Dichtung
- 11: Ventil
- 12: Mikroluftpumpe
- 13: Mikroluftpumpe
- 14: WiFi-Modul
- 15: RFID-Modul
- 16: Energiequelle
- 17: Aufsetzring
- 18: Befestigungsstutzen des Ports
- 21: Auswerterechner
- 22: Datenbank des Anwenders

### Zeichnungen

Es zeigen:
- Fig. 1: die Vorderansicht einer von innen nach außen dichtenden Prüfscheibe (d. h. die dem Außenraum zugewandte Seite),
- Fig. 2: eine schematische Darstellung der im Inneren der Prüfscheibe angeordneten Elemente,
- Fig. 3a: eine Vorderansicht einer von außen nach innen dichtenden Prüfscheibe,
- Fig. 3b: eine Seitenansicht einer von außen nach innen dichtenden, auf einen Befestigungsstutzen des Ports aufgesetzten Prüfscheibe, bevor das Dichtungselement zur Expansion gebracht wird,
- Fig. 4: ein Zusammenwirken einer Auswerteeinheit mit einer Mehrzahl von Prüfscheiben und einer Datenbank des Anwenders,
- Fig. 5: eine Schrägansicht einer dem Isolator zugewandten Seite der von außen nach innen dichtenden Prüfscheibe.

Selbstverständlich sind, mit Ausnahme der Dichteinrichtung, die Positionen der in den Zeichnungen dargestellten Elemente der Prüfscheibe nicht zwingend vorgegeben. Ebenso sind auch Form und Größe der Prüfscheibe nicht vorgegeben. Neben der ovalen sind auch runde und beliebige andere Formen möglich, wobei lediglich eine Übereinstimmung mit der Form und Größe des zu prüfenden Ports zu gewährleisten ist.

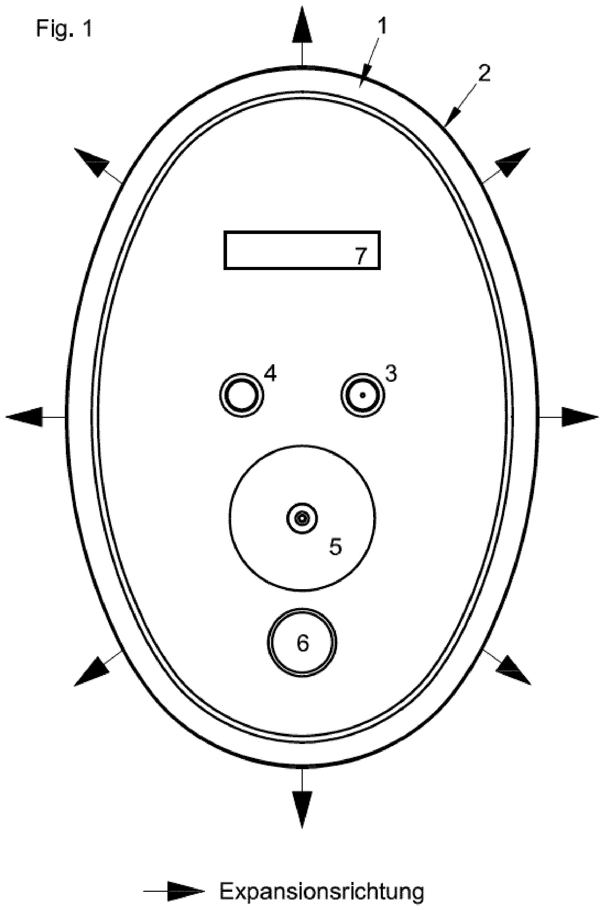

In Fig. 1 ist eine Prüfscheibe 1 dargestellt. An einer Vorderseite der Prüfscheibe 1 ist ein Ein-/ Aus- Schalter 3, eine Start-/Stop-Taste 4, ein Befüllventil 5 zum Füllen eines Handschuhvolumens, ein Vorfilter 6 und ein LCD-Display 7 angeordnet. Die Prüfscheibe ist radial umlaufend von einer als Schlauch ausgebildeten Dichteinrichtung 2 umgeben. Durch Aufblasen des Schlauchs expandiert dieser nach außen in eine Richtung, die durch Pfeile symbolisiert ist. In Fig. 1 ist also eine Prüfscheibe 1 dargestellt, die in einen den Port bildenden Durchbruch eingesetzt werden kann und eine Abdichtung von innen nach außen bewirkt.

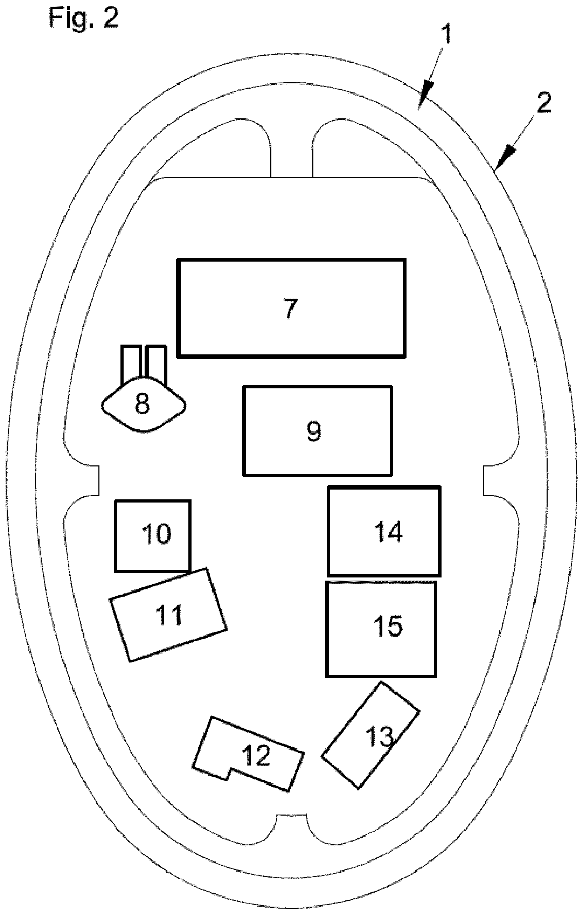

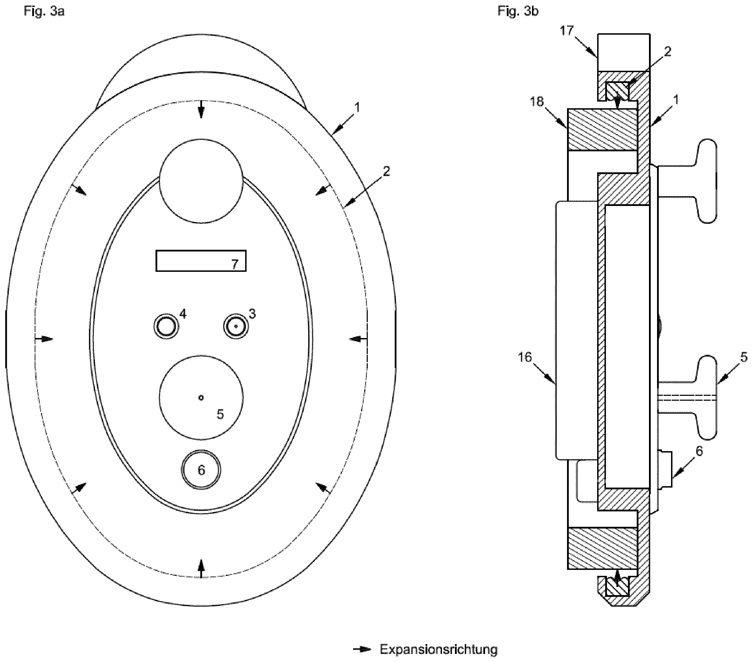

Fig. 2 zeigt eine schematische Innenansicht der Prüfscheibe 1 mit den darin angeordneten Komponenten. Dazu gehören ein Drucksensor 8 zum Erfassen eines Drucks im Handschuhvolumen, eine Druckmesseinrichtung mit einem Mikroprozessor 9 und ein Drucksensor zum Erfassen des Drucks in der Dichteinrichtung 2. Ferner ist ein Ventil zum Befüllen der Dichteinrichtung 2 über eine erste Mikroluftpumpe 12 vorgesehen. Zum Befüllen des Handschuhvolumens dient eine zweite Mikroluftpumpe 13. Als Leseeinrichtung zum Auslesen von Identifikationselementen des Handschuhs und des Ports dient ein RFID-Modul 15, wobei zur Datenübertragung an eine Auswerteeinheit eine Schnittstelle mit einem WiFi-Modul 14 vorgesehen ist. Zur Energieversorgung der einzelnen Komponenten dient eine Energiequelle 16 (Fig. 3b).

In Fig. 3a und 3b ist eine Ausführungsform der Prüfscheibe 1 dargestellt, die im Unterschied zur Ausführungsform nach Fig. 1 und 2 als von außen nach innen dichtende Prüfscheibe ausgebildet ist. Gleiche Komponenten sind dabei mit gleichen Bezugszeichen versehen, entsprechende Komponenten weisen ein gestrichenes Bezugszeichen auf.

Im Unterschied zu der von innen nach außen dichtenden Prüfscheibe 1, wie sie in den Fig. 1 und 2 dargestellt ist, weist die von außen nach innen dichtende Prüfscheibe 1'eine Erweiterung in Form eines Aufsetzringes 17 auf, wobei die durch einen Schlauch gebildete Dichteinrichtung 2'an einer radialen Innenseite des Aufsetzrings 17 angeordnet ist. Zum sicheren Halt der Dichteinrichtung 2'ist dabei an der Innenseite eine Nut ausgebildet. Eine Expansionsrichtung ist wiederum durch Pfeile symbolisiert.

Mit dem Aufsetzring 17 übergreift die Prüfscheibe 1 beim Installieren an einem Port eines Isolators einen Befestigungsstutzen 18 des Ports. Durch Druckbeaufschlagung der Dichteinrichtung 2'expandiert diese radial nach innen und legt sich damit von außen an den Befestigungsstutzen 18 des Ports an. Damit wird eine sichere Abdichtung erreicht.

Im Übrigen entspricht der Aufbau der von außen nach innen dichtenden Prüfscheibe 1' dem Aufbau der von innen nach außen dichtenden Prüfscheibe 1.

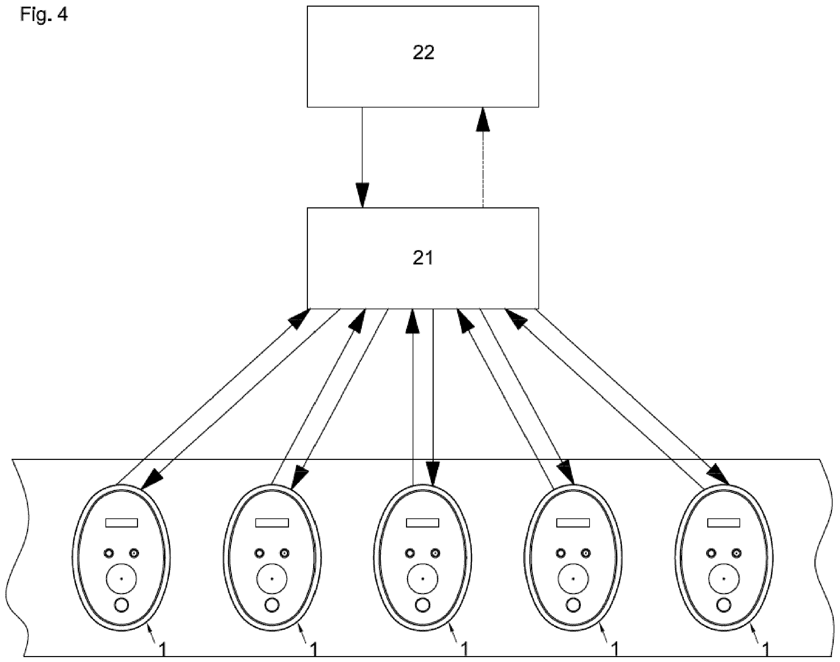

In Fig. 4 ist eine Ausführungsform des Prüfsystems mit einer Mehrzahl von Prüfscheiben 1 dargestellt. Die Prüfscheiben sind über eine drahtlose Verbindung mit einer als Auswerterechner ausgebildeten Auswerteeinheit 21 verbunden. Die Auswerteeinheit 21 hat dabei Zugriff auf eine Datenbank 22 des Anwenders, in der beispielsweise historische Daten für jeden Handschuh, Materialeigenschaften und/oder prozessbezogene Daten hinterlegt sind.

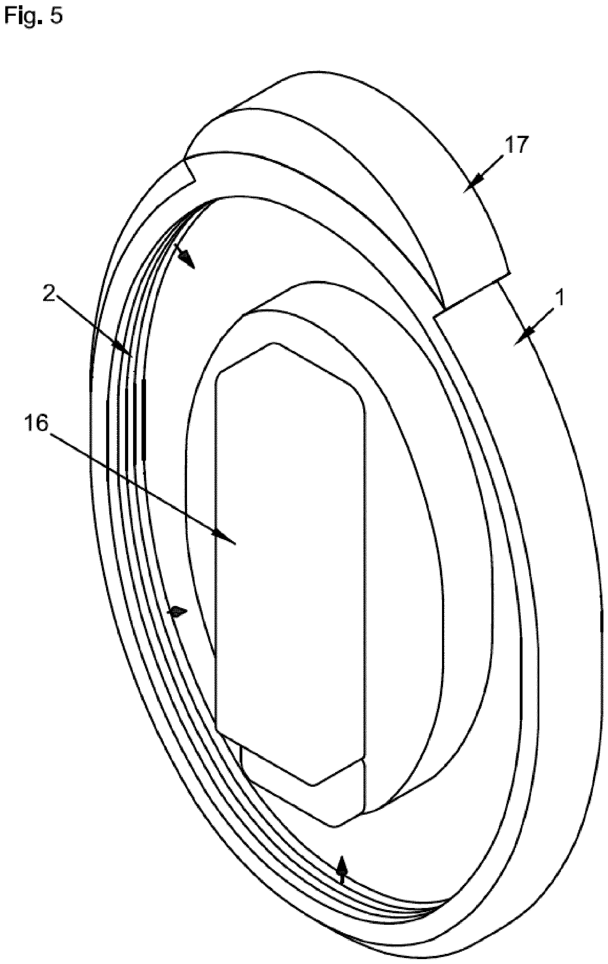

Fig. 5 zeigt in räumlicher Darstellung eine Rückseite der Prüfscheibe 1'. Dabei ist die als Akkumulator ausgebildete Energiequelle 16 zentral an der Rückseite angeordnet. Solange die Prüfscheibe nicht an einem Port installiert ist, ist daher ein einfacher Zugriff bzw. Austausch der Energiequelle möglich.

### Ausführungsbeispiel 1

Es ist eine Dichtheitsprüfung der in den Ports des Isolators einer pharmazeutischen Anlage installierten Handschuhe durchzuführen. Das Isolatorvolumen steht während der Prüfung unter Atmosphärendruck.

Rechtzeitig vor der Prüfung wird sichergestellt, dass sämtliche Ports ein eindeutiges Identifikationselement aufweisen. Als Identifikationselement werden RFID-Elemente gewählt, die irreversibel in eine Bohrung am Rand des Ports eingelassen werden, ohne die Integrität des Isolatorvolumens zu verletzen. Durch diese einmalige Markierung sind die Ports bei allen während ihrer Nutzungsdauer anstehenden Prüfungen eindeutig identifizierbar.

Die Handschuhe sind bei diesem Ausführungsbeispiel schon vom Hersteller standardmäßig mit RFID-Elementen ausgestattet und damit ebenfalls eindeutig identifizierbar.

Es können auch andere Identifikationselemente (Barcodes, Gravuren, gedruckte Nummern) eingesetzt werden, jedoch führen diese zu einem erhöhten Aufwand bei der Auswertung.

Ebenfalls rechtzeitig vor der Prüfung wird eine ausreichende Anzahl von an die Form und Größe der Ports angepassten Prüfscheiben bereitgestellt. Die Form der Ports lässt den Einsatz einer von innen nach außen dichtenden Prüfscheibe **1** zu, sodass diese Ausführungsform der Prüfscheibe gewählt wird.

Die Prüfscheibe **1** wird in den Isolatorport eingesetzt. Zur Inbetriebnahme der Prüfscheibe wird der Ein-/Aus-Schalter **3** betätigt. Weiterhin wird mit dem Betätigen des Start-/Stopp-Schalters **4** das LCD-Display **7** eingeschaltet, das an den Operator Benutzeranweisungen, Fehlermeldungen und Warnsignale übermittelt sowie den Ladezustand der Energiequelle **16** und den vom Drucksensor **8** gemessenen Druck im zu prüfenden Volumen anzeigt. Zudem wird die Mikroluftpumpe **12** eingeschaltet, die den als Dichtungseinrichtung fungierenden aufblasbaren Schlauch **2** befüllt und zur Expansion bringt. Die Expansionsrichtung ist in Fig. 1 durch Pfeile gekennzeichnet. Der Drucksensor **10** misst den ansteigenden Druck im Schlauch **2** und schaltet die Mikroluftpumpe **12** bei Erreichen eines voreingestellten Zieldrucks ab. Der aufgeblasene Schlauch verschließt den Port, sodass Handschuh und Prüfscheibe **1** ein gasdicht abgeschlossenes Handschuhvolumen aufbauen. Der beschriebene Dichtvorgang dauert ca. 30 Sekunden. Während der gesamten Prüfung überwacht der Drucksensor **10** permanent den Druck im Schlauch **12** und pumpt diesen im Falle des Unterschreitens eines voreingestellten Mindestdrucks wieder bis zum Zieldruck auf.

Der Druck im gasdicht abgeschlossenen Handschuhvolumen zwischen Prüfscheibe und Handschuh wird während des gesamten nun folgenden Prüfvorgangs durch den Drucksensor **8** überwacht und durch den Mikroprozessor 9 der Druckmesseinrichtung aufgezeichnet.

Bevor der Prüfvorgang gestartet werden kann, wird die am Isolator vorhandene Druckluftversorgung an das als Handgriff ausgeführte Befüllventil **5** für den Handschuh angeschlossen. Alternativ können Handgriff und Befüllventil auch als eigenständige Elemente ausgebildet werden. Dabei kann das Befüllventil beispielsweise bündig mit einer Frontseite der Prüfscheibe eingelassen sein. Über das Befüllventil **5** wird das gasdicht abgeschlossene Handschuhvolumen zunächst mit einem Überdruck beaufschlagt, der unterhalb des eigentlichen Prüfdrucks liegt (Initialbefüllung). Ist der voreingestellte Zieldruck der Initialbefüllung erreicht, so veranlasst der Drucksensor **8** die Schließung des Befüllventils **5** und damit die Trennung von der äußeren Druckluftversorgung. Zur Feineinstellung des voreingestellten Prüfdrucks veranlasst er nun die Inbetriebnahme der Mikroluftpumpe **13**, die das gasdicht abgeschlossene Handschuhvolumen mit kontaminationsfreier, durch das Vorfilter **6** gereinigter Luft versorgt. Bei Erreichen des exakten Prüfdrucks schaltet der Drucksensor **8** die Mikroluftpumpe **13** ab. Dieser zweistufige Befüllvorgang dauert ca. 30-60 Sekunden.

Der Befüllvorgang kann auch einstufig, d. h. durch den ausschließlichen Einsatz der der Mikroluftpumpe **13** erfolgen, jedoch müsste diese dann, ebenso wie die Energiequelle **16**, leistungsstärker ausgeführt werden, was in der Regel unzweckmäßig ist.

Nach Erreichen des Prüfdrucks wird der Prüfvorgang eingeleitet. Es wird nun zuerst eine vorgegebene Relaxationszeit abgewartet, in der der Handschuh auf die Druckbelastung mit einer zeitlich verzögerten Dehnung reagiert, was zu einem nicht auf eine Leckage zurückzuführenden Druckabfall führt. Die Relaxationszeit ist abhängig vom Handschuhmaterial.

Nach Ablauf dieser Stabilisierungsphase beginnt die eigentliche Messung, während der der Druckverlauf über eine Zeitdauer von beispielsweise 5 Minuten erfasst wird. Der gemessene Druckverlauf wird vom Drucksensor **8** unmittelbar an den Mikroprozessor **9** weitergeleitet. Der Mikroprozessor **9** stellt fest, dass der während der Messzeit auftretende Druckabfall, gegeben durch die Differenz zwischen dem Druck zum Zeitpunkt des Beginns der Messung und dem Druck zum Zeitpunkt des Endes der Messung, einen voreingestellten Wert nicht überschreitet, sodass das Vorliegen einer akuten Leckage auszuschließen ist. Er löst daher kein Alarmsignal aus. Das RFID-Modul **15** liest die RFID-Elemente von Port und Handschuh aus und meldet die Information über die Identität des geprüften Ports und des dort installierten Handschuhs an den Mikroprozessor **9**, der diese Identifikationsdaten mit dem gemessenen Druckverlauf verknüpft und den kompletten Datensatz mithilfe des WiFi-Moduls **14** an die als Auswerterechner **21** ausgebildete Auswerteeinheit übermittelt.

Der Auswerterechner **21** empfängt den Datensatz, speichert ihn und prüft, ob bereits ein Datensatz aus einer früheren Prüfung desselben Handschuhs vorliegt. Er findet in diesem Ausführungsbeispiel einen solchen Datensatz und stellt fest, dass sich der Druckabfall während der neuen Messung, obwohl er noch in den zulässigen Grenzen liegt, gegenüber der vorangehenden Messung deutlich beschleunigt hat, was auf einen kleinen lokalen, jedoch permanent wachsenden Defekt oder eine beschleunigte Degradation des Handschuhmaterials hinweist. Mithilfe der vorliegenden Datensätze prognostiziert er die noch verbleibende Restnutzungsdauer des Handschuhs und übermittelt diese an den Mikroprozessor **9** der Prüfscheibe **1**. Der Mikroprozessor **9** kann daraufhin eine Sperrung der Prüfscheibe veranlassen, indem das Entlastungsventil **11** der Dichteinrichtung **2** blockiert, ein Warnsignal ausgelöst und die prognostizierte Restnutzungsdauer auf dem LCD-Display **7** angezeigt wird. Der Operator muss dann die Entscheidung treffen, ob er die nun als Dichtscheibe fungierende Prüfscheibe 1 im Port belässt und einen sofortigen Handschuhwechsel veranlasst oder aber die Blockierung durch Ausschalten der Prüfscheibe **1** mithilfe des Ein-Aus-Schalters **3** aufhebt, die Prüfscheibe **1** entfernt und den Produktionsprozess zunächst fortsetzt, um den Handschuh bei der nächsten planmäßigen Unterbrechung des Produktionsprozesses zu wechseln.

Der beschriebene Prüfvorgang kann gleichzeitig mit einer beliebigen Anzahl der erfindungsgemäßen Prüfscheiben an einer entsprechenden Anzahl von mit Handschuhen bestückten Ports durchgeführt werden.

### Ausführungsbeispiel 2

Analog zur in Ausführungsbeispiel 1 beschriebenen Aufgabe ist eine weitere Dichtheitsprüfung der in den Ports des Isolators einer pharmazeutischen Anlage installierten Handschuhe durchzuführen.

Die in Ausführungsbeispiel 1 beschriebene Ausstattung der Ports und der Handschuhe mit Identifikationselementen ist gewährleistet.

Rechtzeitig vor der Prüfung wird festgestellt, dass die Ports eine konisch verjüngte Form aufweisen, sodass eine von innen nach außen dichtende Prüfscheibe **1** im Port nicht zuverlässig fixiert werden kann. Jedoch ist der nach außen ragende Befestigungsstutzen **18** des Ports zum Anbringen einer Prüfscheibe geeignet. Es wird daher die von außen nach innen dichtende Ausführungsform **1'** der Prüfscheibe gewählt, die in Fig. 3a und 3b dargestellt ist. Die Prüfscheibe **1'** ist mit einer Erweiterung in Form eines Aufsetzrings **17** ausgestattet, deren innere Abmessungen etwas größer sind als die äußeren Abmessungen des Befestigungsstutzens **18**, sodass sie auf diesen aufsetzbar ist. In einer Innenfläche des Aufsetzrings **17** ist ein durch eine Nut fixierter, als Dichtungseinrichtung fungierender aufblasbarer Schlauch **2'** angeordnet. Der Schlauch **2' weist** ein hinreichend rigides Dichtungsmaterial auf, sodass er auch im nicht expandierten Zustand fest am inneren Rand des Aufsetzrings 17 anliegt. Eine ausreichende Anzahl von an die Form und Größe der Ports angepassten Prüfscheiben dieser Ausführungsform wird bereitgestellt.

Die Prüfscheibe **1'** wird auf den Befestigungsstutzen **18** des Isolatorports aufgesetzt. Der folgende Ablauf ist völlig analog zum Ablauf in Ausführungsbeispiel 1, sodass eine erneute ausführliche Darstellung verzichtbar ist. Es ist lediglich darauf hinzuweisen, dass der als Dichtungselement fungierende aufblasbare Schlauch **2'** hier um den Befestigungsstutzen **18** des Ports verläuft und beim Aufblasen von außen nach innen expandiert, sodass Handschuh, Port und Prüfscheibe ein gasdicht abgeschlossenes Handschuhvolumen aufbauen. Die Expansionsrichtung ist in Fig. 3a, 3b und 5 durch Pfeile gekennzeichnet. Auch der im Verlauf der Prüfung gemessene und an den Auswerterechner übermittelte Druckverlauf entspricht den in Ausführungsbeispiel 1 dargestellten Ergebnissen.

Im Gegensatz zur in Ausführungsbeispiel 1 dargestellten Situation hat der Auswerterechner **21** hier aber Zugriff auf ausgewählte prozessbezogene Daten in der Datenbank **22** des Anwenders, sodass ein erweitertes Auswerteverfahren zum Einsatz kommen kann.

Der Auswerterechner **21** empfängt und speichert den Datensatz, der den gemessenen Druckverlauf und die Identifikationsdaten von Port und Handschuh enthält. Er prüft, ob bereits ein Datensatz aus einer früheren Prüfung desselben Handschuhs vorliegt. Er findet einen solchen Datensatz und stellt fest, dass der Druckabfall während der neuen Messung in den zulässigen Grenzen liegt und sich auch gegenüber der vorangehenden Messung nicht beschleunigt hat. Die Prüfung erbringt also keinerlei Hinweis auf einen Defekt oder auf eine bereits vorliegende Degradation des Handschuhmaterials, sodass der Handschuh aufgrund der bis hierher verwerteten Daten als uneingeschränkt einsetzbar erscheint.

Im Rahmen des erweiterten Auswerteverfahrens extrahiert der Auswerterechner aus den Prozessdaten des Anwenders nun die gesamte bisherige Belastung des Handschuhs (Art, Dauer und Konzentration der einwirkenden Chemikalien) und berechnet unter Verwendung der ebenfalls beim Anwender vorliegenden Daten zur Resistenz des Handschuhmaterials gegenüber den verwendeten Chemikalien den aktuellen Degradationszustand des Handschuhs. Er stellt fest, dass aufgrund der bisherigen Chemikalienbelastung eine beschleunigte Degradation des Handschuhs schon begonnen hat, obwohl sie durch die Prüfung noch nicht nachweisbar ist. Wie in Ausführungsbeispiel 1 prognostiziert er die noch verbleibende Restnutzungsdauer des Handschuhs und übermittelt diese an den Mikroprozessor **9** der Prüfscheibe **1'**. Der Mikroprozessor veranlasst dann die in Ausführungsbeispiel 1 beschriebenen Maßnahmen, auf die der Operator wie dort beschrieben zu reagieren hat.

Damit wird sichergestellt, dass der Handschuh rechtzeitig, jedoch nicht unnötig früh, gewechselt wird.

Auch das erweiterte Auswerteverfahren kann gleichzeitig mit einer beliebigen Anzahl der Prüfscheiben an einer entsprechenden Anzahl von mit Handschuhen bestückten Ports durchgeführt werden.

Der Datenfluss zwischen den einzelnen Prüfscheiben, dem Auswerterechner **21** und der Datenbank **22** des Anwenders ist in Fig. 4 dargestellt. In Fig. 4 weist das Prüfsystem eine Mehrzahl an Prüfscheiben der in Fig. 1 und 2 dargestellten Ausführungsform **1 auf**. Die Prüfscheiben können aber auch durch Prüfscheiben der Ausführungsform **1'** oder durch eine Kombination beider Ausführungsformen gebildet werden.

## Patentansprüche

1. Prüfsystem mit mindestens einer Prüfscheibe (1, 1'), einem Isolator und einer Auswerteeinheit (21) zur Prüfung der Dichtigkeit eines Handschuhs, der in einem Port des Isolators installiert ist, wobei die Prüfscheibe (1, 1') hermetisch dicht mit dem Port verbunden ist, wobei der Handschuh mit der Prüfscheibe (1, 1') ein Handschuhvolumen einschließt, das durch die Prüfscheibe (1, 1') unter Überdruck gesetzt ist, wobei die Prüfscheibe (1, 1') eine Druckmesseinrichtung mit einem Mikroprozessor (9) und einem Speicher zur Aufzeichnung und Speicherung eines Druckverlaufs im Handschuhvolumen und eine Datenschnittstelle (14) aufweist, **dadurch gekennzeichnet, dass**
die Prüfscheibe (1, 1') mittels einer Leseeinrichtung (15) sowohl zur Identifikation des Handschuhs durch auslesen eines ersten Identifikationselements, das am Handschuh angeordnet ist, als auch zur Identifikation des Ports durch auslesen eines zweiten Identifikationselements, das an dem Port angeordnet ist, ausgebildet ist.

2. Prüfsystem nach Anspruch 1, **dadurch gekennzeichnet, dass** es eine radial expandierende Dichteinrichtung (2, 2') und eine erste Mikroluftpumpe (12) aufweist, mit der die Dichteinrichtung (2, 2') expandierbar ist.

3. Prüfsystem nach Anspruch 1 oder 2, **dadurch gekennzeichnet, dass** es eine zweite Mikroluftpumpe (13) mit einem Vorfilter (6) zum Füllen des Handschuhvolumens aufweist.

4. Prüfsystem nach einem der vorhergehenden Ansprüche, **dadurch gekennzeichnet, dass** es eine elektrische Energiequelle (16) aufweist, die insbesondere als Akkumulator ausgebildet ist.

5. Prüfsystem nach einem der vorhergehenden Ansprüche, **dadurch gekennzeichnet, dass** die Leseeinrichtung (15) ein RFID-Modul, CCD-Sensoren oder Lasersensoren aufweist.

6. Prüfsystem nach einem der vorhergehenden Ansprüche, **dadurch gekennzeichnet, dass** die Prüfscheibe (1, 1') eine Regeleinrichtung zur automatischen Einstellung eines Drucks im Handschuhvolumen aufweist.

7. Prüfsystem nach einem der vorhergehenden Ansprüche, **dadurch gekennzeichnet, dass** über die Datenschnittstelle (14) der Druckverlauf und Informationsdaten der Identifikationselemente an eine Auswerteeinheit eines Prüfsystems insbesondere kabellos und gegebenenfalls verschlüsselt übertragbar sind, wobei die Datenschnittstelle insbesondere ein WiFi-Modul, ein W-LAN-Modul, ein Bluetooth-Modul oder ein anderes funkbasiertes Sende-/Empfangsmodul aufweist.

8. Prüfsystem nach einem der vorherigen Ansprüche, **dadurch gekennzeichnet, dass** die Auswerteinheit (21) eine Speichereinheit und eine Ausgabeeinheit umfasst und mit einer Anwenderdatenbank (22) verbindbar ist, wobei das Prüfsystem dazu ausgebildet ist, den Druckverlauf mit den Identifikationsdaten genau einem Handschuh und einem Port zuzuordnen und eine Bewertung eines Zustands und/oder eine Abschätzung einer Restnutzungsdauer des Handschuhs vorzunehmen.

9. Prüfsystem nach einem der vorherigen Ansprüche, **dadurch gekennzeichnet, dass** die Auswerteeinheit (21) ein WiFi-Modul, ein W-LAN-Modul, ein Bluetooth-Modul oder ein anderes funkbasiertes Sende-/Empfangsmodul aufweist.

10. Prüfsystem nach einem der vorherigen Ansprüche, **dadurch gekennzeichnet, dass** in der Auswerteinheit (21) prozessbezogene Daten über die Verwendung des Handschuhs hinterlegbar sind, die bei der Auswertung berücksichtigbar sind.

11. Prüfsystem nach einem der vorherigen Ansprüche, **dadurch gekennzeichnet, dass** es eine Mehrzahl von Prüfscheiben zur gleichzeitigen Prüfung mehrerer Handschuhe aufweist, wobei die Prüfscheiben mit der Auswerteeinheit kommunizieren.

12. Verfahren zum Bewerten der Dichtigkeit eines Handschuhs mit einem Prüfsystem nach einem der Ansprüche 1 bis 11, **dadurch gekennzeichnet, dass** die Prüfscheibe
(1, 1') hermetisch dicht mit dem Port verbunden wird, sodass der Handschuh mit der Prüfscheibe (1, 1') ein Handschuhvolumen einschließt, das durch die Prüfscheibe (1, 1') anschließend unter Überdruck gesetzt wird, wobei der Druckverlauf durch eine Druckmesseinrichtung der Prüfscheibe (1, 1') über einen vorgebbaren Zeitraum aufgezeichnet wird und dem Druckverlauf Identifikationsdaten des Handschuhs und des Ports durch auslesen eines ersten an dem Handschuh angeordneten ersten Identifikationselements und eines zweiten an dem Port angeordneten Identifikationselements zugeordnet werden, wobei aus dem Druckverlauf ein Druckabfall ermittelt wird, der mit einem Grenzwert verglichen wird.

13. Verfahren nach Anspruch 12, **dadurch gekennzeichnet, dass** bei der Bewertung des Zustands historische Daten, insbesondere Prozessdaten, berücksichtigt werden.

14. Verfahren nach einem der Ansprüche 12 oder 13, **dadurch gekennzeichnet, dass** die Druckverläufe von mehreren Prüfscheiben (1, 1') für eine Mehrzahl von Handschuhen gleichzeitig empfangen und verarbeitet werden, wobei eine eindeutige Zuordnung der jeweiligen Druckverläufe zu einem entsprechenden Handschuh und Port erfolgt.

15. Verfahren nach einem der Ansprüche 12 bis 14, **dadurch gekennzeichnet, dass** ein Entfernen der Prüfscheibe (1, 1') aus dem Port verhindert wird, wenn ein Defekt des Handschuhs festgestellt wird.

16. Verfahren nach einem der Ansprüche 12 bis 15, **dadurch gekennzeichnet, dass** ein zu einem früheren Zeitpunkt für einen bestimmten Handschuh aufgenommener Druckverlauf mit einem zu einem späteren Zeitpunkt für diesen Handschuh aufgenommenen Druckverlauf verglichen wird, wobei dieser Vergleich zur Abschätzung einer Restnutzungsdauer berücksichtigt wird.

## Claims

1. Test system having at least one test disc (1, 1'), an isolator and an evaluation unit (21) for testing the seal of a glove, which is installed in a particular port of the isolator, wherein the test disc (1, 1') is connected to the port in a hermetically sealed manner, wherein the glove and the test disc (1, 1') define a glove volume, which is placed under excess pressure by the test disc (1, 1'), wherein the test disc (1, 1') has a pressure-measuring device with a microprocessor (9) and a memory for recording and storing a glove volume pressure profile and a data interface (14),
**characterised in that**
the test disc (1, 1') is configured by means of a reading device (15) to determine both the identity of the glove by reading a first identification element, which is arranged on the glove, and the identity of the port by reading a second identification element, which is arranged on the port.

2. Test system according to claim 1, **characterised in that** it has a radially-expanding sealing device (2, 2') and a first micro-air pump (12) to expand the sealing device (2, 2').

3. Test system according to claim 1 or claim 2, **characterised in that** it has a second micro-air pump (13) with a pre-filter (6) to fill the glove volume.

4. Test system according to any one of the preceding claims, **characterised in that** it has an electrical energy source (16), in particular in the form of an accumulator.

5. Test system according to any one of the preceding claims, **characterised in that** the reading device (15) has an RFID module, CCD sensors or laser sensors.

6. Test system according to any one of the preceding claims, **characterised in that** the test disc (1, 1') has a control device for automatically setting a pressure in the glove volume.

7. Test system according to any one of the preceding claims, **characterised in that** the pressure profile and information regarding the identification element can be in particular wirelessly transmitted, in an encrypted format where appropriate, via the data interface (14) to an evaluation unit of a test system, wherein the data interface has in particular a WiFi module, a WLAN module, a Bluetooth module or another radio-based transceiver module.

8. Test system according to any one of the preceding claims, **characterised in that** the evaluation unit (21) comprises a storage unit and an output unit and can be connected to a user database (22), wherein the test system is configured to assign the pressure profile with the identification data precisely to one glove and one port, and assess a status and/or estimate a residual period of use of the glove.

9. Test system according to any one of the preceding claims, **characterised in that** the evaluation unit (21) has WiFi module, WLAN module, Bluetooth module or other radio-based transceiver module.

10. Test system according to any one of the preceding claims, **characterised in that** process-related data about the use of the glove can be stored in the evaluation unit (21) and taken into account in the evaluation.

11. Test system according to any one of the preceding claims, **characterised in that** it has a plurality of test discs for simultaneously testing a plurality of gloves, wherein the test discs communicate with the evaluation unit.

12. Method for assessing the seal of a glove using a test system according to any one of claims 1 to 11,
**characterised in that** the test disc
(1, 1') is connected to the port in a hermetically sealed manner such that the glove and the test disc (1, 1') define a glove volume, which is then placed under excess pressure by the test disc (1, 1'), wherein the pressure profile is recorded by the test disc (1, 1') over a predefinable period and identification data of the glove and the port is assigned to the pressure profile by reading a first identification element arranged on the glove and a second identification element arranged on the port, wherein a pressure drop, which is compared with a limiting value, is determined from the pressure profile.

13. Method according to claim 12, **characterised in that** historical data, in particular process data, is taken into account during the evaluation of the state.

14. Method according to claim 12 or claim 13, **characterised in that** the pressure profiles for a plurality of gloves are received simultaneously from a plurality of test discs (1, 1') and processed, wherein the respective pressure profiles are assigned unambiguously to a corresponding glove and port.

15. Method according to any one of claims 12 to 14, **characterised in that** removal of the test disc (1, 1') from the port is prevented if a defect in the glove is detected.

16. Method according to any one of claims 12 to 15, **characterised in that** a pressure profile, which is recorded for a specific glove at an earlier point in time, is compared with a pressure profile, which is recorded for said glove at a later point in time, wherein said comparison is taken into account for the estimation of a residual period of use.

## Revendications

1. Système de contrôle avec au moins un disque de contrôle (1, 1'), un isolateur et une unité d'évaluation (21) pour contrôler l'étanchéité d'un gant qui est installé dans un port de l'isolateur, le disque de contrôle (1, 1') étant assemblé de manière hermétiquement étanche au port, le gant avec le disque de contrôle (1, 1') enfermant un volume de gant qui est mis en surpression par le disque de contrôle (1, 1'), le disque de contrôle (1, 1') comportant un dispositif de mesure de pression avec un microprocesseur (9) et avec une mémoire pour enregistrer et mémoriser une courbe de pression dans le volume de gant et une interface de données (14),
**caractérisé en ce que** le disque de contrôle (1, 1') est conçu, au moyen d'un dispositif de lecture (15), aussi bien pour l'identification du gant par lecture d'un premier élément d'identification qui est agencé sur le gant que pour l'identification du port par lecture d'un deuxième élément d'identification qui est agencé sur le port.

2. Système de contrôle selon la revendication 1, **caractérisé en ce qu'**il comporte un dispositif d'étanchéité (2, 2') à extension radiale et une première micro-pompe à air (12) avec laquelle le dispositif d'étanchéité (2, 2') peut être étendu.

3. Système de contrôle selon la revendication 1 ou 2, **caractérisé en ce qu'**il comporte une deuxième micro-pompe à air (13) avec un filtre en amont (6) pour remplir le volume de gant.

4. Système de contrôle selon l'une des revendications précédentes, **caractérisé en ce qu'**il comporte une source d'énergie électrique (16) qui est conçue notamment comme un accumulateur.

5. Système de contrôle selon l'une des revendications précédentes, **caractérisé en ce que** le dispositif de lecture (15) comporte un module RFID, des capteurs CCD ou des capteurs lasers.

6. Système de contrôle selon l'une des revendications précédentes, **caractérisé en ce que** le disque de contrôle (1, 1') comporte un dispositif de réglage pour régler automatiquement une pression dans le volume de gant.

7. Système de contrôle selon l'une des revendications précédentes, **caractérisé en ce que**, par l'intermédiaire de l'interface de données (14), la courbe de pression et des données d'information des éléments d'identification peuvent être transmis à une unité d'évaluation d'un système de contrôle, notamment sans fil et éventuellement sous forme cryptée, l'interface de données comportant notamment un module WiFi, un module W-LAN, un module Bluetooth ou un autre module d'émission/réception radio.

8. Système de contrôle selon l'une des revendications précédentes, **caractérisé en ce que** l'unité d'évaluation (21) comprend une unité de mémorisation et une unité de sortie et peut être reliée à une base de données d'utilisateur (22), le système de contrôle étant conçu pour associer la courbe de pression avec les données d'identification précisément à un gant et à un port et pour effectuer une évaluation d'un état et/ou une estimation d'une durée d'utilisation restante du gant.

9. Système de contrôle selon l'une des revendications précédentes, **caractérisé en ce que** l'unité d'évaluation (21) comporte un module WiFi, un module W-LAN, un module Bluetooth ou un autre module d'émission/réception radio.

10. Système de contrôle selon l'une des revendications précédentes, **caractérisé en ce que**, dans l'unité d'évaluation (21) peuvent être enregistrées des données se rapportant au processus qui concernent l'utilisation du gant et qui peuvent être prises en compte lors de l'évaluation.

11. Système de contrôle selon l'une des revendications précédentes, **caractérisé en ce qu'**il comporte une multiplicité de disques de contrôle pour un contrôle simultané de plusieurs gants, les disques de contrôle communiquant avec l'unité d'évaluation.

12. Procédé d'évaluation de l'étanchéité d'un gant avec un système de contrôle selon l'une des revendications 1 à 11, **caractérisé en ce que** l'on assemble le disque de contrôle (1, 1') au port de manière hermétiquement étanche de telle sorte que le gant avec le disque de contrôle (1, 1') enferme un volume de gant qui est ensuite mis en surpression par le disque de contrôle (1, 1'), la courbe de pression étant enregistrée par un dispositif de mesure de pression du disque de contrôle (1, 1') pendant un intervalle de temps pouvant être prescrit et des données d'identification du gant et du port étant associées à la courbe de pression par lecture d'un premier élément d'identification agencé sur le gant et d'un deuxième élément d'identification agencé sur le port, une chute de pression qui est comparée à une valeur limite pouvant alors être déterminée à partir de la courbe de pression.

13. Procédé selon la revendication 12, **caractérisé en ce que**, lors de l'évaluation de l'état, des données historiques, notamment des données de processus, sont prises en compte.

14. Procédé selon l'une des revendications 12 ou 13, **caractérisé en ce que** les courbes de pression de plusieurs disques de contrôle (1, 1') pour une multiplicité de gants sont reçues et traitées simultanément, une association univoque des courbes de pression respectives à un gant correspondant et à un port correspondant étant effectuée.

15. Procédé selon l'une des revendications 12 à 14, **caractérisé en ce que** l'on empêche un retrait du disque de contrôle (1, 1') hors du port lorsqu'un défaut du gant est constaté.

16. Procédé selon l'une des revendications 12 à 15, **caractérisé en ce que** l'on compare une courbe de pression enregistrée à un instant antérieur pour un certain gant à une courbe de pression enregistrée à un instant ultérieur pour ce gant, cette comparaison étant prise en compte pour l'estimation d'une durée d'utilisation restante.
